# EUROPÄISCHE PATENTSCHRIFT

(11) **EP 1 647 461 B1**
(45) Veröffentlichungstag und Bekanntmachung des Hinweises auf die Patenterteilung: **15.12.2010**
(21) Anmeldenummer: 05108940.7
(22) Anmeldetag: 28.09.2005
(51) Int. Cl.: B60T 8/40, F04B 1/04

(54) **Kolbenpumpe**
Piston pump
Pompe à piston

(30) Priorität: 15.10.2004 DE 102004050579; 12.09.2005 DE 102005043266
(43) Veröffentlichungstag der Anmeldung: 19.04.2006
(73) Patentinhaber: Continental Teves AG & Co. oHG, 60488 Frankfurt am Main (DE)
(72) Erfinder: Dinkel, Dieter, 65824 Schwalbach (DE); Otto, Albrecht, 61137 Schöneck (DE); Sonnenschein, Georg, 65760 Eschborn (DE); Zentgraf, Hans-Georg, 65428 Rüsselsheim (DE); Tarandek, Kristian, 63263 Neu-Isenburg (DE)

(56) Entgegenhaltungen:
- EP-B2- 0 734 494
- WO-A-97/05388
- WO-A-2004/037624
- DE-A1- 4 027 794
- DE-A1- 10 346 237
- DE-A1- 19 732 810

## Beschreibung

Die Erfindung betrifft eine Kolbenpumpe zum Fördern von Druckmittel in einen hydraulischen Verbraucher einer elektronisch geregelten Fahrzeugbremsanlage. Bei diesem Verbraucher kann es sich prinzipiell um wenigstens eine Fahrzeugbremse, oder um einen Hauptzylinder, oder um einen Druckmittelbehälter, oder um einen Druckmittelspeicher handeln. Prinzipiell ist eine Versorgung mehrerer der genannten Verbraucher oder eine Versorgung von Kombinationen der genannten Verbraucher möglich.

Bei bekannten Kolbenpumpen ist ein Kolben in einer Stufenbohrung eines Aufnahmekörpers bewegbar angeordnet. Der Kolben ist direkt in dem Aufnahmekörper geführt, und es sind Rückschlagventile vorgesehen, welche der Ventilation eines Arbeitsraumes dienen. Der Arbeitsraum wird von dem Kolben begrenzt. Eine Rückstellfeder ist in dem Arbeitsraum zwischen einem Widerlager und einem Federtopf am Kolben abgestützt. Die Stufenbohrung ist mit Hilfe von einem Verschluss von der Umgebung getrennt.

Aus der EP 0 734 494 B2 ist eine Kolbenpumpe bekannt geworden, deren Kolben unmittelbar im Pumpengehäuse geführt angeordnet ist. Der Federkäfig für die Ventilbauteile ist derart als Blechformteil ausgebildet, dass dadurch der Kolben, die Rückstellfeder, und eine Ventilbaugruppe als eigenständig handhabbare Baugruppe aneinander gesichert sind. Durch diese besondere Maßnahme wird es ermöglicht, eine Laufbuchse zu rationalisieren, die den Zusammenhalt der Bauteile einer Kolbenpumpe bewirkt.

Ein wesentlicher Nachteil der Kolbenpumpe gemäß EP 0 734 494 B2 besteht jedoch darin, dass deren axiale Baulänge verbesserungswürdig ist. Der Miniaturisierungsgrad reicht nicht aus. Dies liegt einerseits darin begründet, dass Pumpenkolben und Rückschlagventile axial hintereinander angeordnet sind. Weiterhin erfordert die besondere Funktion von dem Federkäfig einen axialen Befestigungsabschnitt, welcher ein Vorderteil des Pumpenkolbens außen übergreift, und von radial außen formschlüssig in eine Nut des Pumpenkolben eingreift. Das Dichtungsmittel ist in axialem Abstand zu dem Kolbenende anzuordnen. Schließlich ist die Abstützung der Rückstellfeder am Kolben verbesserungswürdig, denn die clipsartige Befestigung der Rückstellfeder am Federkäfig erfordert eine hochgenaue Tolerierung des Federkäfigs und weiterhin eine hochgenaue Tolerierung des Federdurchmessers. Dies steigert die Herstellkosten, denn insbesondere die Rückstellfeder ist ein metallisches, wärmebehandeltes Bauteil, welches unvermeidbare Maßänderungen infolge Wärmebehandlung erleidet. Um einen sicheren Zusammenhalt der beteiligten Bauteile zu ermöglichen, ist eine hochgenau tolerierte Herstellung des Federkäfigs erforderlich.

Aus W02004/037624A ist bereits eine Kolbenpumpe der gattungsbildenden Art bekannt, mit einem Stufenkolben, der zur Aufnahme einer Dichtungsanordnung am Außenumfang abgestuft ist. Der Stufenkolben verfügt über eine plane Auflage, wozu der Stufenkolben abschnittsweise rohrförmig ausgebildet ist, um radial innen von der Dichtungsanordnung entfernt einen im Wesentlichen topfförmigen Federkäfig an der planen Auflage des Stufenkolbens versenkt aufzunehmen. Am trichterförmigen Topfboden des Federkäfigs liegt eine Ventilfeder an, die einen im Stufenkolben eingesetzten Ventilkörper beaufschlagt. Der Federkäfig weist einen Bund auf, der sich an der Stirnseite des Stufenkolbens abstützt und der die Dichtungsanordnung überdeckt. Zwischen dem Bund und einem in einem Verdrängungsraum eingesetzten Widerlager befindet sich eine Kolbenrückstellfeder unter Vorspannung, die den Stufenkolben in Richtung der unteren Totpunktlage beaufschlagt.

Aus DE19732810A1 ist bereits eine Kolbenpumpe bekannt, die Zentrierschenkel für eine Rückstellfeder sowie Zentrieschenkel für einen an einem Pumpenkolben gelagerten Federkäfig aufweist, die einstückig ausgebildet sind und entgegengesetzt gerichtet sind, wobei die Zentrierschenkel für die Rückstellfeder radial innen in die schraubenförmige Rückstellfeder eingreifen.

Die Erfindung beruht auf der Aufgabe, eine Kolbenpumpe bereit zu stellen, deren axiale Baulänge bei verbesserter Abstützung der Rückstellfeder verringert ist, und wobei dennoch die wesentlichen Bauteile der Kolbenpumpe als Unterbaugruppe gebündelt in Form einer Patrone einfach in einem Aufnahmekörper montierbar sind.

Die Aufgabe wird erfindungsgemäß für eine Kolbenpumpe der angegebenen Art mit den kennzeichnenden Merkmalen des Patentanspruchs 1 gelöst.

Eine statisch bestimmte Krafteinleitung und Bauteilabstützung wird erzielt, wenn jeweils wenigstens drei Auflageschenkel und jeweils wenigstens drei Zentrierschenkel vorgesehen sind.

Montageprobleme werden gelöst, wenn die Zentrierschenkel für den Federkäfig und die Zentrierschenkel für die schraubenförmige Rückstellfeder einstückig ausgebildet sind, wobei die Zentrierschenkel für die Rückstellfeder radial innen in die Rückstellfeder eingreifen können, oder die Federwindungen radial außen übergreifen können.

Um die Lebensdauer des Rückschlagventils zu erhöhen, und um eine erhöhte Sicherheit gegen Federbruch zu erzielen, weist der Federkäfig Mittel auf, welche einen Öffnungshub des Ventilkörpers begrenzen. Um eine umformtechnische Herstellung zu ermöglichen, sind die Mittel als Schenkel ausgebildet, an denen der Ventilkörper nach einem definierten Öffnungshub anschlägt. Für eine statisch definierte Abstützung sind die Schenkel in Umfangsrichtung verteilt angeordnet.

Eine besonders kostengünstige Variante der vorliegenden Erfindung ist dadurch gekennzeichnet, dass der Federkäfig als einstückiges Blechformteil ausgebildet ist, dass der Werkstoff des Federkäfigs eine einheitliche Dicke aufweist, und dass die Schenkel sowie die Anschläge als Ausklinkungen oder Ausprägungen des Blechformteiles vorgesehen sind.

Die Erfindung wird nachstehend anhand von bevorzugten Ausführungsformen, die in der Zeichnung wiedergegeben sind, näher beschrieben. In der Zeichnung zeigt:
Fig. 1 ein bekanntes Aggregat mit einer Kolbenpumpe gemäß DE 103 46 237.6 vergrößert sowie im Schnitt,
Fig. 2 eine verbesserte Kolbenpumpe gemäß der Erfindung vergrößert sowie im Schnitt,
Fig. 3 eine vergrößerte perspektivische Ansicht eines Federtopfes der Pumpe nach Fig. 2, und
Fig. 4 ein vergrößerter Schnitt durch einen Federtopf.

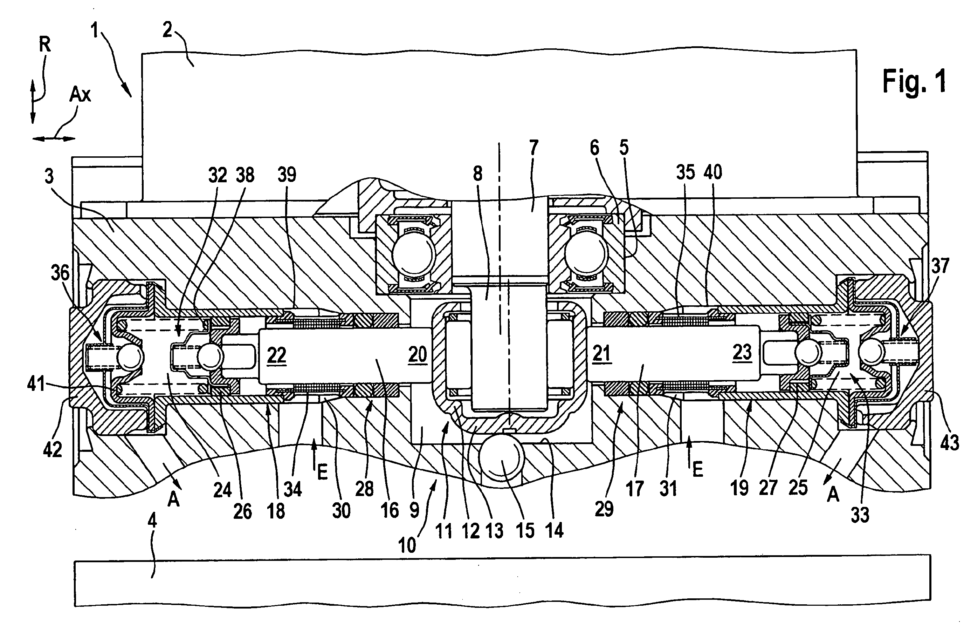

Die Fig. 1 bezieht sich auf ein Aggregat 1 mit einem schematisch skizzierten Antrieb 2, insbesondere ein Elektromotor, welcher auf einer Seite an einem Aufnahmekörper 3 für elektromagnetisch betätigbare Ventile, Kanäle, Speicher- oder Dämpferkammern sowie eine Kolbenpumpe 10 angeflanscht ist. Auf einer gegenüberliegenden Seite des Aufnahmekörpers 3 ist eine, lediglich schematisch verdeutlichte, elektronische Regeleinheit 4 vorgesehen.

Das dargestellte Aggregat 1 dient insbesondere der Schlupf- oder Fahrstabilitätsregelung von Kraftfahrzeugen. Derartige Bremsanlangen werden oft mit Abkürzungen wie ABS, ASR, ESP oder FDR bezeichnet. In der Bremsanlage dient die Kolbenpumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR, ESP). Die Kolbenpumpe wird beispielsweise bei einer Bremsanlage mit Schlupfregelung und / oder bei einer als Lenkhilfe dienenden Bremsanlage (ESP, FDR) benötigt. Mit der Schlupfregelung kann beispielsweise ein Blockieren der Räder des Fahrzeugs während eines Bremsvorgangs bei starkem Druck auf ein Bremspedal und/oder ein Durchdrehen von angetriebenen Rädern des Fahrzeugs verhindert werden. Im Ergebnis bewirkt ABS daher eine uneingeschränkte Lenkbarkeit des Fahrzeugs bei hoher Verzögerung und vermeidet Schleudertendenzen. Eine elektronische Bremsmomentenregelung für die Räder des Fahrzeugs wird ermöglicht.

Bei einer Bremsanlage die als Lenkhilfe (ESP) eingesetzt wird, erfolgt unabhängig von einer Betätigung des Bremspedals oder Gaspedals ein Bremsdruckaufbau in einem oder mehreren Radbremszylindern, um beispielsweise ein Ausbrechen des Fahrzeugs aus der von dem Fahrer vorgesehenen Spur oder einen Fahrzeugüberschlag zu verhindern (Kippverhinderung).

Eine Stufenbohrung 5 des Aufnahmekörpers 3 nimmt ein abgedichtetes Wälzlager 6 der Antriebswelle 7 auf, deren freies Ende als Excenter 8 ausgebildet ist, und in einen Kurbelraum 9 der Stufenbohrung 5 hineinragt. Prinzipiell ist es möglich, dass der Excenter 8 unmittelbar an die Antriebswelle 7 oder Motorwelle angeschliffen, oder als gesondertes Bauelement ausgebildet und an der Antriebswelle 7 befestigt ist. Bei erhöhter Pumpenlaufdauer kann es passieren, dass der Kurbelraum 9 mit Leckageflüssigkeit, insbesondere mit Bremsflüssigkeit geflutet ist, wobei ein an den Kurbelraum 9 angeschlossenes Reservoir zur Flüssigkeitsaufnahme innerhalb dem Antrieb 2, innerhalb dem Aufnahmekörper 3, oder innerhalb der elektronischen Regeleinheit 4 dienen kann.

Der Excenter 8 ist mit einem einseitig durch einen topfförmigen Aussenring 12 geschlossenes Nadellager 11 versehen, dessen Topfboden 13 mit einem warzenförmigen Vorsprung punktuell sowie reibungsarm an einer Stirnseite der Antriebswelle anlegbar ist. Ein Boden 14 des Kurbelraumes 9 verfügt über eine Kugel 15, so dass der rotierende Topfboden 13 mit einer motorwellenabgewandten Außenseite reibungsarm an der Kugel 15 anliegt. Der relativ zu dem Aufnahmekörper 3 verdrehbare Außenring 12 erhält dadurch keinen unmittelbaren Kontakt zu dem Werkstoff des Aufnahmekörpers 3, so dass infolge Rotation keine Zerspanung des Aufnahmekörpers einritt. Dadurch wird eine Reibungsbeanspruchung des Aufnahmekörpers 3 vermieden, ohne verschleißresistente Werkstoffbeschichtungen, wie Eloxierungen auf Wandungen eines Aluminium-Aufnahmekörpers 3 aufbringen zu müssen.

Wie die Fig. 1 zeigt, sind zwei jeweils mehrteilig ausgebildete Stufenkolben 16,17 der Kolbenpumpe 10 innerhalb einer Stufenbohrung 39, 40 bewegbar in einer Laufbuchse 18,19 geführt angeordnet, durchgreifen mit einem ersten hydraulischen Durchmesser einen Nachlaufraum 30,31, und reichen mit einem Ende 20,21 in den Kurbelraum 9, wo sie den Umfang des Aussenrings 12 kontaktieren. Ein anderes, geschlitztes Ende 22,23 der Kolben 16,17 weist einen, zweiten hydraulisch wirksamen Durchmesser auf und begrenzt einen Verdrängungsraum 24,25. Während das zweite Ende 22,23 der Kolben 16,17 über einen Führungs- und Dichtungsring 26,27 in der Laufbuchse 18,19 abgedichtet geführt ist, ermöglicht eine weitere Führungs- und Dichtungsanordnung 28,29 die Anordnung des Nachlaufraumes 30,31 zwischen der besagten Dichtungsanordnung 28,29 und einem, als Saugventil wirksamen Rückschlagventil 32,33. Eine Kolbenrückstellfeder 38 ist aufnahmekörperseitig fest abgestützt und beaufschlagt den Stufenkolben 16,17. Von einem Druckmitteleinlass E gelangt das Druckmittel über einen Kanal und ein an einer Hülse vorgesehenen Filter 34,35 in den Nachlaufraum 30,31. Im Ansaugtakt gelangt das Druckmittel bei geöffnetem Rückschlagventil (Saugventil) 32,33 in den Verdrängungsraum 24,25 und im Verdrängungstakt bei geöffnetem Rückschlagventil (Druckventil) 36,37 in einen Druckmittelauslass A. Es bleibt hinzuzufügen, dass der wirksame hydraulische Kolbendurchmesser in dem Verdrängungsraum 24,25 zusammen mit dem hydraulisch wirksamen Durchmesser im Nachlaufraum 30,31 verbesserte Ansaugeigenschaften bei zählflüssigem Druckmittel ermöglicht. Denn bei einer Bewegung des Kolbens in Richtung oberem Totpunkt (OT) wird der Nachlaufraum vergrößert, was die anzusaugende Flüssigkeitssäule beschleunigt.

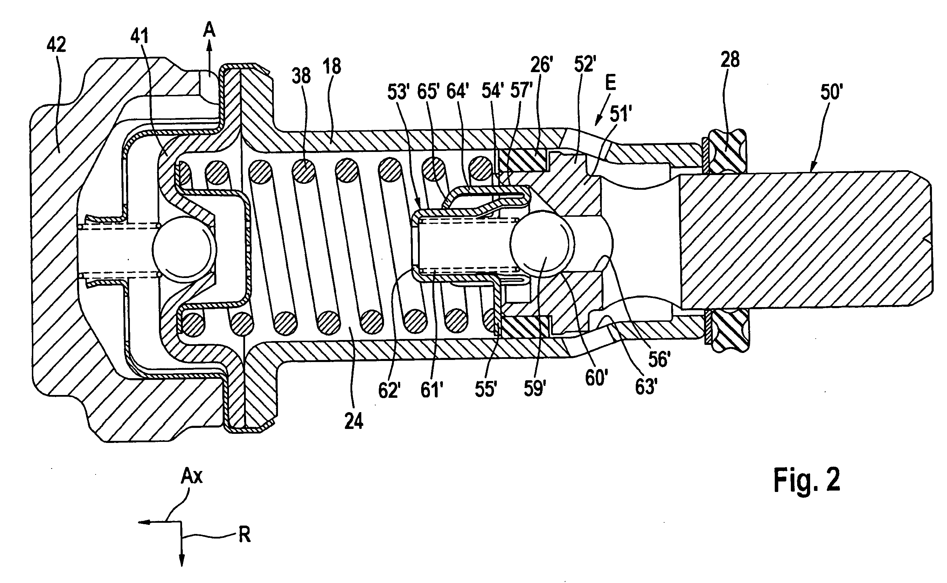

Nachstehend wird im Detail auf eine neue Kolbenpumpe nach den Figuren 2 bis 4 eingegangen.

Ein bevorzugtes Merkmal besteht darin, dass der Federkäfig 53' mit wenigstens einem Mittel 44a, 44b,44c versehen ist, welches einen Öffnungshub des Ventilkörpers 59' begrenzt. Dieses Mittel 44a,44b,44c ist vorzugsweise als mechanischer Anschlag für den Ventilkörper 59 ausgebildet, so dass dieser nach einem definierten Öffnungshub durch den genannten Anschlag blockiert wird, um die Rückstellfeder 61' vor Überbeanspruchung, dem Zusammenpressen auf Blocklänge oder ähnlichem mehr zu schützen. Es ist möglich, das Mittel 44a,44b,44c als Schenkel auszubilden. Damit der Ventilkörper 59' ein reproduzierbares Schließverhalten aufweist, sind mehrere Anschläge am Umfang des Federkäfigs 53' verteilt sowie im Winkel zueinander vorgesehen. Dabei ist eine ungerade Anzahl von Anschlägen vorgesehen, wobei prinzipiell drei Anschläge favorisiert werden.

Insgesamt wird dadurch der Vorteil erzielt, dass der maximale Ventilöffnungshub von Rückschlagventilen mechanisch begrenzt ist. Die Dauerfestigkeit einer Rückstellfeder 61' wird dadurch erhöht, denn es wird vermieden, dass diese bis auf ihre Blocklänge komprimiert werden kann. Jeder Anschlag kann als Schenkel vorgesehen sein, welcher aus der napfförmigen Aufnahme für die Rückstellfeder 61' ausgeklinkt, und in Richtung

Ventilkörper 59' gebogen ist. Dadurch erstreckt sich jeder Schenkel im wesentlichen parallel zu der

Kolbenbewegungsrichtung Ax sowie in Richtung auf den Stufenkolben 50 zu. Die Länge der Schenkel bestimmt den maximal möglichen Hub des Ventilkörpers 59'. Die Schenkel befinden sich auf einem gemeinsamen Durchmesser, der wesentlich geringer ausgebildet ist, als der Ventilkörperdurchmesser.

Neben dem genannten Schenkel zur Bildung eines Anschlags können weitere Schenkel vorgesehen sein, die nachstehend im einzelnen beschrieben werden. Die Schenkel können aus einer kreisförmigen Blechronde ausgeklinkt werden.

Aus den Fig. 2 bis 4 geht eine Ausführungsform einer erfindungsgemäßen Kolbenpumpe hervor, wobei mit Fig. 1 übereinstimmende Bauteile mit übereinstimmenden Bezugsziffern versehen sind.

Ein Stufenkolben 50' begrenzt mit einem rohrartig, hohl ausgebildeten Ende 51' einen Verdrängungsraum 24. Das entsprechende Ende 51' des Stufenkolbens 50' ist am Außenumfang abgestuft ausgebildet, und trägt und zentriert eine Dichtungsanordnung 26', die in Axialrichtung einerseits von einer Stufe 52' am Stufenkolben 50' gehalten wird, und in Axialrichtung andererseits von einem Federkäfig 53' gehalten wird. Der Federkäfig 53' besitzt mehrere Aufgaben, indem er einerseits die Dichtungsanordnung 26' in Axialrichtung sichert, zur Kraftübertragung zwischen Kolbenrückstellfeder 38 und Stufenkolben 50' dient, sowie zur festen Abstützung und Aufnahme der Rückstellfeder 61' herangezogen wird.

Der Stufenkolben 50' verfügt radial innen, bezogen auf die Stufe 52', über eine plane Auflage 54 für plane Auflageschenkel 55 des Federkäfigs 53'. Die plane Auflage 54 an dem Stufenkolben 50' weist einen mittleren Durchmesser auf, welcher im wesentlichen mit dem Durchmesser der Kolbenrückstellfeder 38 übereinstimmt. Dadurch tritt in den Auflageschenkeln 55 im wesentlichen nur Druckspannung auf.

Zur Ausbildung der beschriebenen Rohrform verfügt der Stufenkolben 50' radial innen, bezogen auf die Auflage 54, über eine abgestufte Bohrung 56, wobei die Bohrung 56 einen einzigen, kragenförmig umlaufenden oder aber wie in der Zeichnung gezeigt, mehrere, in Umfangsrichtung zylindersegmentartig gekrümmt angeordnete, Zentrierschenkel 57 des Federkäfigs 53' aufnimmt. Dadurch ist der Federkäfig 53' in Relation zu dem Stufenkolben 50' definiert zentriert.

Wie weiterhin aus den Figuren hervorgeht, ist der Ventilkörper 59' kugel- oder plattenförmig ausgebildet. Er befindet sich innerhalb der abgestuften Bohrung 56' des Stufenkolben 50' integriert sowie koaxial zu dieser Bohrung 56' ausgerichtet. Innerhalb der Bohrung 56' verfügt der Stufenkolben 50' weiterhin über einen konischen Ventilsitz 60, welcher in axialem Abstand zur Auflage 54, sowie vollständig integriert vorgesehen ist. Der Ventilkörper 59' wird permanent durch eine Rückstellfeder 61' in Ventilschließrichtung so beaufschlagt, dass dieser grundsätzlich auf dem Ventilsitz 60' aufsitzt. Zu diesem Zweck ist die Rückstellfeder 61' an dem Federkäfig 53' im Bereich von einem gelochten Boden 62 abgestützt. Das derart gebildete Rückschlagventil dient der Ventilation des Verdrängungsraumes 24 im Sinne einer Saugventilfunktion, indem es geeignet ist, den Verdrängungsraum 24 in Abhängigkeit von den herrschenden Druckverhältnissen temporär mit dem Druckmitteleinlass E zu verbinden.

Eine derart geschaffene, selbständig handhabbare Pumpenpatrone geht aus der Figur 2 hervor und umfasst Stufenkolben 50', Laufbuchse 18, Rückstellfeder 38, Federkäfig 53' mit Saugventil und die Dichtungsanordnung 26'. Dabei ist die Laufbuchse 18 an einem Ende mit einem Anschlag 63' für den Stufenkolben 50' versehen, wobei der Anschlag 63' in Radialrichtung kleiner als der Durchmesser des Stufenkolbens 50' ausgebildet ist, während am gegenüberliegenden Ende der Laufbuchse 18 das Widerlager 41 zur festen Abstützung der Kolbenrückstellfeder 38 befestigt ist.

Die Pumpenpatrone ist als Unterbaugruppe einfach in dem Aufnahmekörper 3 montierbar, indem sie auf ein Verschlusselement 42,43 aufgeschoben und zusammen mit der Dichtungsanordnung 28 in die Stufenbohrung 39,40 eingeführt wird. Weil bei den Ausführungsformen der Erfindung eine Innenzentrierung zwischen Stufenkolben 50' und Federkäfig 53' vorliegt, kann der radial außen verbleibende Platz zur definierten, raumsparenden Abstützung der Kolbenrückstellfeder 38 genutzt werden. Die Ausführungsform ist deshalb besonderes für Kolbenpumpen mit einem großen Kolbenquerschnitt geeignet. Weil der mittlere Durchmesser der Auflage 54' am Stufenkolben 50' im wesentlichen mit dem Durchmesser der Kolbenrückstellfeder 38 überein stimmt, ist eine beanspruchungsgerechte Ausbildung der Auflageschenkel 55' ermöglicht. Denn eine Einleitung von kombinierten Druck- und Biegekräften wird vermieden. Folglich wird eine bessere Dauerfestigkeit der Kolbenpumpe erzielt.

Dieses Design ist vorwiegend für stark miniaturisierte Kolbenpumpen mit relativ kleinem Kolbenquerschnitt geeignet, indem der Werkstoff des Federkäfigs 53', ausgehend von einem gelochten Boden 62', zunächst zylindrisch-napfförmig aufgebildet ist, und mit radial gerichteten Auflageschenkeln 55a,b,c' für die Auflage 54' ausgestattet ist.

Die Auflageschenkel 55a,b,c' sind regelmäßig am Umfang des Federkäfigs 53' verteilt angeordnet. Vorzugsweise sind drei Auflageschenkel 55a,b,c' im Winkel zueinander am Umfang verteilt vorgesehen. Die Fläche der Auflageschenkel 55a,b,c' ist kleeblattartig ausgebildet, wobei diese kleeblattartig erweiterte Auflagefläche eine verringerte Flächenpressung bei verbesserter Ausnutzung des Blechwerkstoffes ermöglicht.

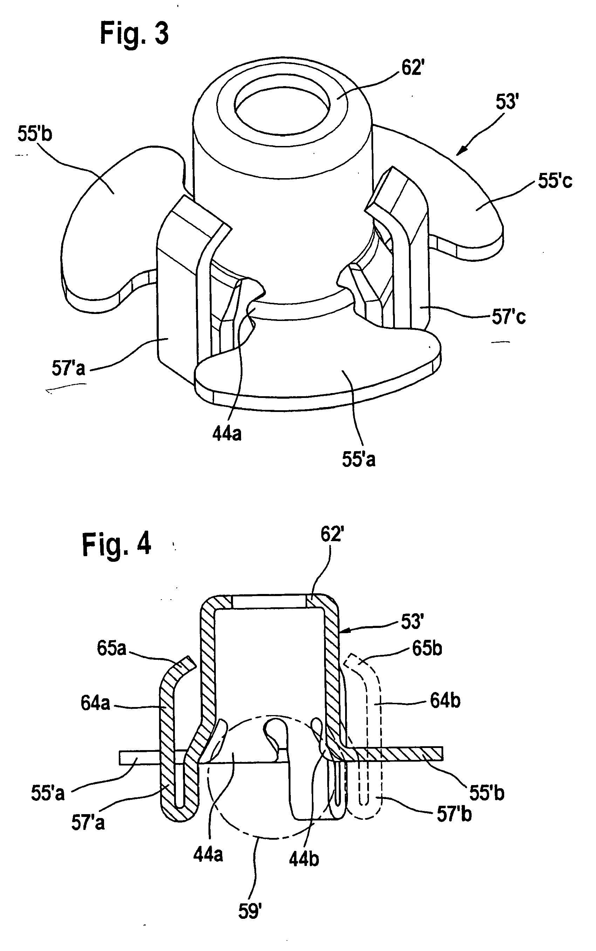

Nach Fig. 2 bis 4 erfüllen die Zentrierschenkel 57a,b,c' für den Federkäfig 53' eine Doppelfunktion indem sie so gestaltet sind, dass sie gleichzeitig eine Zentrierung der Kolbenrückstellfeder 38 bewirken. Dieses Ziel wird erreicht, indem die Zentrierschenkel 57a,b,c' im Querschnitt wie aus Fig. 4 ersichtlich, u-förmig um 180° umgebogen sind, so dass jeder Zentrierschenkel 57a,b,c' einen federelastischen Schenkelabschnitt 64 aufweist, der im wesentlichen parallel zu dem Napf verläuft, welcher zur Aufnahme der Rückstellfeder 61' dient. Der federelastische Schenkelabschnitt 64 erlaubt dadurch eine verbesserte Klemmwirkung von dem Federkäfig 53' am Stufenkolben 50'. Zur Verbesserung einer maschinellen Montage ist der federelastische Schenkelabschnitt 64 endseitig mit einer Schräge 65 nach radial innen, also in Richtung Napf abgekröpft. Durch die Schräge 65 wird es vereinfacht, die Kolbenrückstellfeder 38 maschinell auf die Zentrierschenkel 57a,b,c' aufzufädeln. Ferner wird ein Selbstzentrierungsprozess beim Auffädeln ermöglicht, wenn die Zentrierschenkel 57a,b,c' in das Federinnere eintauchen.

Es bietet sich an, wenn sich die unterschiedlichen Schenkel jedes Federkäfigs 53' parallel entlang einer gemeinsamen axialen Längsachse erstrecken. Dadurch wird es ermöglicht, die Schenkelpaare in nahezu einem Arbeitsgang herzustellen. Die Herstellung des Federkäfigs 53' erfolgt schrittweise, indem in mehreren ersten Schritten ein Topf mit einem Topfkragen und dem zu lochenden Boden 62' gezogen wird. Sodann erfolgt das Ausstanzen und Biegen der einzelnen Schenkel einschließlich vielleicht notwendiger Nachbiegevorgänge.

## Patentansprüche

1. Kolbenpumpe (10), zum Fördern von Druckmittel in einen hydraulischen Verbraucher einer elektronisch geregelten Fahrzeugbremsanlage, umfassend
einen Stufenkolben (50') der in einer Stufenbohrung (39,40) eines Aufnahmekörpers (3) innerhalb einer Laufbuchse (18) in einer Axialrichtung (Ax) bewegbar angeordnet ist,
der Stufenkolben (50') ist zumindest an einem Ende (51') teilweise rohrartig hohl ausgebildet,
ein Verdrängungsraum (24) wird durch das Ende des Stufenkolbens (50') begrenzt, und der Stufenkolben (50') ist am Außenumfang abgestuft ausgebildet, und trägt und zentriert eine Dichtungsanordnung (26'), die in Axialrichtung (Ax) einerseits von einer Stufe (52') am Stufenkolben (50') gehalten wird, und andererseits von einem Federkäfig (53') gehalten wird,
radial innen von der Dichtungsanordnung (26') verfügt der Stufenkolben (50') über eine plane Auflage (54') für plane Auflageschenkel (55a, b, c') des Federkäfigs (53'),
die plane Auflage (54') des Stufenkolbens (50') ist orthogonal zur Axialrichtung (Ax) vorgesehen,
radial innen von der Auflage (54') verfügt der Stufenkolben (50') über eine abgestufte Bohrung (56'), wobei die Bohrung (56') Zentrierschenkel (57a, b, c') des Federkäfigs (53') aufnimmt,
koaxial sowie innerhalb der abgestuften Bohrung (56') ist ein federvorgespannter Ventilkörper (59') von einem Rückschlagventil angeordnet, das der Ventilation des Verdrängungsraumes (24) dient,
eine Kolbenrückstellfeder (38) ist in dem Verdrängungsraum (24) angeordnet, und stützt sich einerseits an einem Widerlager (41) von der Laufbuchse (18) und andererseits an dem Federkäfig (53') ab,
die Laufbuchse (18) weist an einem Ende einen Anschlag (63') für den Stufenkolben (50') auf, wobei der Anschlag (63') in Radialrichtung (R) kleiner als der Durchmesser des Stufenkolbens (50') ausgebildet ist, während am gegenüberliegenden Ende der Laufbuchse (18) zumindest das Widerlager (41) für die Kolbenrückstellfeder (38) befestigt ist, so dass Stufenkolben (50'), Rückstellfeder (38), Rückschlagventil und Dichtungsanordnung (26') als selbständig handhabbare Baugruppe innerhalb der Laufbuchse (18) angeordnet sind,
**dadurch gekennzeichnet, dass**
die plane Auflage (54') des Stufenkolbens (50') einen mittleren Durchmesser aufweist, welcher im Wesentlichen mit dem Durchmesser der Kolbenrückstellfeder (38) übereinstimmt,
und dass die Auflageschenkel (55a,b,c') und die Zentrierschenkel (57a,b,c') des Federkäfigs (53') in Umfangsrichtung jeweils abwechselnd vorgesehen sind.

2. Kolbenpumpe (10) nach Anspruch 1, **dadurch gekennzeichnet, dass** jeweils wenigstens drei Auflageschenkel (55a,b,c') und jeweils wenigstens drei Zentrierschenkel (57a,b,c') vorgesehen sind.

3. Kolbenpumpe (10) nach Anspruch 1, **dadurch gekennzeichnet, dass** die Zentrierschenkel (57a,b,c') für den Federkäfig (53') und Schenkelabschnitte (64a,b,c) zur Zentrierung der Kolbenrückstellfeder (38) einstückig ausgebildet sind, wobei die Schenkelabschnitte (64a,b,c) radial innen in eine schraubenförmige Kolbenrückstellfeder (38) eingreifen.

4. Kolbenpumpe (10) nach Anspruch 1, **dadurch gekennzeichnet, dass** der Federkäfig (53') Mittel (44a,b,c) aufweist, welche einen Öffnungshub des Ventilkörpers (59') begrenzen.

5. Kolbenpumpe (10) nach Anspruch 4, **dadurch gekennzeichnet, dass** die Mittel (44a,b,c) als Schenkel ausgebildet sind, an denen der Ventilkörper (59') nach einem definierten Öffnungshub anschlägt.

6. Kolbenpumpe (10) nach Anspruch 5, **dadurch gekennzeichnet, dass** die Schenkel in Umfangsrichtung des Federkäfigs (53') verteilt angeordnet sind.

7. Kolbenpumpe (10) nach Anspruch 1, **dadurch gekennzeichnet, dass** der Federkäfig (53') als einstückiges Blechformteil ausgebildet ist, dass der Werkstoff des Federkäfigs (53') eine einheitliche Dicke aufweist, und dass Schenkel sowie Anschläge als Ausklinkungen oder Ausprägungen des Blechwerkstoffes vorgesehen sind.

## Claims

1. Piston pump (10), for the conveyance of pressure medium into a hydraulic consumer of an electronically controlled vehicle brake system, comprising
a stepped piston (50') which is arranged movably in an axial direction (Ax), within a liner (18), in a stepped bore (39, 40) of a reception body (3),
the stepped piston (50') is designed, at least at one end (51'), to be partially hollow in a tube-like manner,
a displacement space (24) is delimited by the end of the stepped piston (50'), and the stepped piston (50') is designed to be stepped on the outer circumference and carries and centres a sealing arrangement (26') which, on the one hand, is held in the axial direction (Ax) by a step (52') on the stepped piston (50') and, on the other hand, is held by a spring cage (53'),
the stepped piston (50') has, radially inwards from the sealing arrangement (26'), a planar support (54') for planar bearing legs (55a, b, c') of the spring cage (53'),
the planar support (54') of the stepped piston (50') is provided orthogonally to the axial direction (Ax),
the stepped piston (50') has, radially inwards from the support (54'), a stepped bore (56'), the bore (56') receiving centring legs (57a, b, c') of the spring cage (53'),
arranged coaxially, and within the stepped bore (56'), is a spring-pre-stressed valve body (59') of a non-return valve which serves for ventilating the displacement space (24),
a piston return spring (38) is arranged in the displacement space (24) and is supported, on the one hand, on an abutment (41) of the liner (18) and, on the other hand, on the spring cage (53'),
the liner (18) has, at one end, a stop (63') for the stepped piston (50'), the stop (63') being designed to be smaller in the radial direction (R) than the diameter of the stepped piston (50'), while at the opposite end of the liner (18), at least the abutment (41) for the piston return spring (38) is fastened, so that the stepped piston (50'), return spring (38), non-return valve and sealing arrangement (26') are arranged as an independently handleable subassembly within the liner (18),
**characterized in that**
the planar support (54') of the stepped piston (50') has a mean diameter which is essentially identical to the diameter of the piston return spring (38),
and **in that** the bearing legs (55a, b, c') and the centring legs (57a, b, c') of the spring cage (53') are each provided alternately in the circumferential direction.

2. Piston pump (10) according to Claim 1, **characterized in that** in each case at least three bearing legs (55a, b, c') of in each case at least three centring legs (57a, b, c') are provided.

3. Piston pump (10) according to Claim 1, **characterized in that** the centring legs (57a, b, c') for the spring cage (53') and leg portions (64a, b, c) for centring the piston return spring (38) are formed in one piece, the leg portions (64a, b, c) engaging radially inwards into a helical piston return spring (38).

4. Piston pump (10) according to Claim 1, **characterized in that** the spring cage (53') has means (44a, b, c) which limit an opening stroke of the valve body (59').

5. Piston pump (10) according to Claim 4, **characterized in that** the means (44a, b, c) are designed as legs, against which the valve body (59') butts after a defined opening stroke.

6. Piston pump (10) according to Claim 5, **characterized in that** the legs are arranged so as to be distributed in the circumferential direction of the spring cage (53').

7. Piston pump (10) according to Claim 1, **characterized in that** the spring cage (53') is designed as a one-piece sheet-metal moulding, **in that** the material of the spring cage (53') has a uniform thickness, and **in that** legs and stops are provided as notches or embossings in the sheet-metal material.

## Revendications

1. Pompe à piston (10), pour refouler du fluide sous pression dans un consommateur hydraulique d'une installation de freinage de véhicule à commande électronique, comprenant
un piston étagé (50') qui est disposé dans un alésage étagé (39, 40) d'un corps de réception (3) à l'intérieur d'un manchon coulissant (18) de manière déplaçable dans la direction axiale (Ax),
le piston étagé (50') étant au moins à une extrémité (51') réalisé en partie de manière tubulaire creuse,
un espace de déplacement (24) étant limité par l'extrémité du piston étagé (50') et le piston étagé (50') étant réalisé de manière étagée à la périphérie extérieure, et portant et centrant un agencement d'étanchéité (26'), qui est maintenu dans la direction axiale (Ax) d'une part par un étage (52') sur le piston étagé (50'), et d'autre part qui est maintenu par une cage de ressort (53'),
le piston étagé (50') disposant, radialement à l'intérieur de l'agencement d'étanchéité (26'), d'un appui plan (54') pour des branches d'appui planes (55a, b, c') de la cage de ressort (53'),
l'appui plan (54') du piston étagé (50') étant prévu perpendiculairement à la direction axiale (Ax),
le piston étagé (50') disposant, radialement à l'intérieur de l'appui (54'), d'un alésage étagé (56'), l'alésage (56') recevant des branches de centrage (57a, b, c') de la cage de ressort (53'),
un corps de soupape précontraint par un ressort (59') d'une soupape anti retour étant disposé co-axialement ainsi qu'à l'intérieur de l'alésage étagé (56'), et servant à la ventilation de l'espace de déplacement (24),
un ressort de rappel de piston (38) étant disposé dans l'espace de déplacement (24), et s'appuyant d'une part contre une butée (41) du manchon coulissant (18) et d'autre part contre la cage de ressort (53'),
le manchon coulissant (18) présentant, à une extrémité, une butée (63') pour le piston étagé (50'), la butée (63') étant inférieure, dans la direction radiale (R), au diamètre du piston étagé (50'), tandis qu'à l'extrémité opposée du manchon coulissant (18), est fixée au moins la butée (41) pour le ressort de rappel de piston (38), de sorte que le piston étagé (50'), le ressort de rappel (38), la soupape anti retour et l'agencement d'étanchéité (26') soient disposés sous forme de module pouvant être manipulé de manière autonome à l'intérieur du manchon coulissant (18),
**caractérisée en ce que**
l'appui plan (54') du piston étagé (50') présente un diamètre moyen qui coïncide essentiellement avec le diamètre du ressort de rappel de piston (38),
et **en ce que** les branches d'appui (55a, b, c') et les branches de centrage (57a, b, c') de la cage de ressort (53') sont prévues à chaque fois en alternance dans la direction périphérique.

2. Pompe à piston (10) selon la revendication 1, **caractérisée en ce qu'**à chaque fois au moins trois branches d'appui (55a, b, c') et à chaque fois au moins trois branches de centrage (57a, b, c') sont prévues.

3. Pompe à piston (10) selon la revendication 1, **caractérisée en ce que** les branches de centrage (57a, b, c') pour la cage de ressort (53') et les portions de branches (64a, b, c) sont réalisées d'une seule pièce pour le centrage du ressort de rappel de piston (38), les portions de branches (64a, b, c) venant en prise radialement à l'intérieur dans un ressort de rappel de piston (38) de forme hélicoïdale.

4. Pompe à piston (10) selon la revendication 1, **caractérisée en ce que** la cage de ressort (53') présente des moyens (44a, b, c) qui limitent une course d'ouverture du corps de soupape (59').

5. Pompe à piston (10) selon la revendication 4, **caractérisée en ce que** les moyens (44a, b, c) sont réalisés sous forme de branches contre lesquelles le corps de soupape (59') vient buter après une course d'ouverture définie.

6. Pompe à piston (10) selon la revendication 5, **caractérisée en ce que** les branches sont réparties dans la direction périphérique de la cage de ressort (53').

7. Pompe à piston (10) selon la revendication 1, **caractérisée en ce que** la cage de ressort (53') est réalisée sous forme de pièce moulée en tôle d'une seule pièce, **en ce que** le matériau de la cage de ressort (53') présente une épaisseur unitaire, et **en ce que** les branches et les butées sont prévues sous forme d'encoches ou de marquages du matériau en tôle.
